# EUROPEAN PATENT APPLICATION

(11) **EP 4 656 055 A1**
(43) Date of publication of application: **03.12.2025**
(21) Application number: 25180037.1
(22) Date of filing: 30.05.2025
(51) Int. Cl.: A23C 20/00, A23L 29/212, A23C 19/055, A23C 20/02

(54) **PLANT-BASED CHEESES AND PROCESSES FOR MAKING THE SAME**

(30) Priority: 30.05.2024 US 202463653589 P
(71) Applicant: Smith, Joshua, Westminster, CO 80020 (US); Fitzgerald, Sarah, Tacoma WA 98407 (US)
(72) Inventor: Smith, Joshua, Westminster, CO 80020 (US); Fitzgerald, Sarah, Tacoma WA 98407 (US)
(74) Representative: Vial, Lionel

(57) **Abstract**

The present disclosure relates to products, such as substantially plant-based cheese products. The substantially plant-based cheese products may have a first polysaccharide at a concentration of 5% w/w or less, a second polysaccharide at a concentration of 5% w/w or less, and a plant protein at a concentration of 5% w/w or less, and/or they may have a burst strength of between about 50 and 110 g as determined using a TA-108S-5i puncture method. Also disclosed are methods of making the same.

## Description

### CROSS-REFERENCE TO RELATED APPLICATION

This application claims priority to U.S. Provisional Application No. 63/653,589, filed May 30, 2024, the disclosure of which is hereby incorporated by reference in its entirety.

### TECHNICAL FIELD

The present disclosure is directed to products such as plant-based cheeses and methods of making the same.

### BACKGROUND

Plant-based products, such as plant-based cheeses, have grown in popularity over recent years. However, compared to similar animal-based products, plant-based products often suffer from poor organoleptic properties, including taste and texture.

### SUMMARY

Disclosed herein are products, such as a plant-based cheeses, having excellent organoleptic properties, including taste and texture. Also disclosed herein are methods of making the products described herein. The methods may include combining a plurality of materials to provide a mixture, pouring the mixture into a mold, and solidifying the mixture to provide a product.

### BRIEF DESCRIPTION OF THE DRAWINGS

The patent or application file contains at least one drawing executed in color. Copies of this patent or patent application publication with color drawing(s) will be provided by the Office upon request and payment of the necessary fee.
FIG. 1A shows the melted liking opinion of the participants as described in Example II.
FIG. 1B shows the cold liking opinion of the participants as described in Example II.
FIG. 2A shows the liking scores of important attributes when the products were served on a grilled cheese, as described in Example II.
FIG. 2B shows the liking scores of important attributes when the products were served cold, as described in Example II.
FIG. 3 shows the results of this burst strength study as described in Example III.
FIG. 4 shows the results of this burst strength study as described in Example IV.
FIG. 5 shows the results of this burst strength study as described in Example V.
FIG. 6 shows the results of this burst strength study as described in Example VI.

### DETAILED DESCRIPTION

Disclosed herein are products, such as plant-based cheeses, having excellent organoleptic properties, including taste and texture. Also disclosed herein are methods of making the products described herein. The methods may include combining a plurality of materials to provide a mixture, pouring the mixture into a mold, and solidifying the mixture to provide a product.

According to some non-limiting aspects, the product is a plant-based product. As used herein, the term "plant-based" refers to a material free of animal ingredients, such as dairy ingredients. In some non-limiting examples, the product is a plant-based cheese product.

The plant-based cheese products of the present disclosure may include a plurality of plant-based cheese materials. According to some aspects, the plurality of plant-based cheese materials may include one or more lipids, minerals, preservatives, coloring agents, flavoring agents, polysaccharides, plant proteins, water, or a combination thereof.

According to some aspects, the plurality of plant-based cheese materials may include one or more lipids. Non-limiting examples of lipids according to the present disclosure include oils, including coconut oil, sunflower oil, vegetable oil, canola, safflower oil, shea butter, palm oil, and combinations thereof.

According to some aspects, the plurality of plant-based cheese materials may include one or more minerals. Non-limiting examples of minerals according to the present disclosure include, but are not limited to, sea salt, calcium, iodine, magnesium, potassium, phosphorus, zinc, and combinations thereof. In some non-limiting examples, each mineral may be provided in the form of an oxide, a carbonate, a sulfate, a citrate, or a combination thereof.

According to some aspects, the plurality of plant-based cheese materials may include one or more preservatives, such as a yeast inhibitor, a mold inhibitor, a bacterial inhibitor, antioxidants, or a combination thereof.

According to some aspects, the plurality of plant-based cheese materials may include one or more coloring agents. As used herein, the term "coloring agent" refers to a plant-based cheese material that provides a plant-based cheese product with a selected color.

According to some aspects, the plurality of plant-based cheese materials may include one or more flavoring agents. As used herein, the term "flavoring agent" refers to a plant-based cheese material that provides a plant-based cheese product with a selected flavor. Example flavoring agents include, but are not limited to, organic compounds, yeast extracts, acids, and combinations thereof. In some non-limiting examples, acids include citric acid, lactic acid, malic acid, tartaric acid, hydrochloric acid, phosphoric acid, and combinations thereof.

According to some aspects, the plurality of plant-based cheese materials may include one or more polysaccharides. Non-limiting examples of polysaccharides include starches and derivatives thereof. According to some aspects, the polysaccharide may include maltodextrin (such as tapioca maltodextrin), tapioca starch, inulin, potato starch, or a combination thereof. According to some aspects, each of the polysaccharides may be modified or unmodified.

According to some aspects, the plurality of plant-based cheese materials may include one or more plant proteins. Non-limiting examples of plant proteins include a potato protein, pea protein, fava bean protein, soy protein, corn protein, almond protein, wheat protein, oat protein, hemp protein, chickpea protein, rice protein, proteins of microbial origin (e.g., bacteria, yeast, mold, algae and/or other single and multi-cellular eukaryotic microorganisms origin), or a combination thereof.

According to some aspects, the plurality of plant-based cheese materials may include one or more of the polysaccharides in a total concentration of between about 0.1 and 30% w/w, optionally between about 0.1 and 20% w/w, optionally between about 0.1 and 15% w/w, optionally between about 0.1 and 14% w/w, optionally between about 0.1 and 13% w/w, optionally between about 0.1 and 12% w/w, optionally between about 0.1 and 11% w/w, optionally between about 0.1 and 10% w/w, optionally between about 0.1 and 9% w/w, optionally between about 0.1 and 8% w/w, optionally between about 0.1 and 7% w/w, optionally between about 0.1 and 6% w/w, optionally between about 0.1 and 5% w/w, optionally between about 0.1 and 4% w/w, optionally between about 0.1 and 3% w/w, optionally between about 0.1 and 2% w/w, and optionally between about 0.1 and 1% w/w.

According to some aspects, the plurality of plant-based cheese materials may include a first polysaccharide at a concentration of 10% w/w or less, optionally 9% w/w or less, optionally 8% w/w or less, optionally 7% w/w or less, optionally 6% w/w or less, 5% w/w or less, optionally 4% w/w or less, optionally 3% w/w or less, optionally 2% w/w or less, and optionally 1% w/w or less.

According to some aspects, the plurality of plant-based cheese materials may include a second polysaccharide at a concentration of 10% w/w or less, optionally 9% w/w or less, optionally 8% w/w or less, optionally 7% w/w or less, optionally 6% w/w or less, 5% w/w or less, optionally 4% w/w or less, optionally 3% w/w or less, optionally 2% w/w or less, and optionally 1% w/w or less.

According to some aspects, the plurality of plant-based cheese materials may include a plant protein at a concentration of 10% w/w or less, optionally 9% w/w or less, optionally 8% w/w or less, optionally 7% w/w or less, optionally 6% w/w or less, 5% w/w or less, optionally 4% w/w or less, optionally 3% w/w or less, optionally 2% w/w or less, and optionally 1% w/w or less.

According to some aspects, the first polysaccharide may be maltodextrin, inulin, or a combination thereof.

According to some aspects, the second polysaccharide may be modified tapioca starch, unmodified tapioca starch, or a combination thereof.

According to some aspects, the plant protein may be potato protein, pea protein, fava bean protein, soy protein, or a combination thereof.

According to some non-limiting aspects, the product is a substantially plant-based product. As used herein, the term "substantially plant-based" refers to a material having no more than 10% w/w of animal ingredients, such as dairy ingredients. In some non-limiting examples, the product is a substantially plant-based cheese product having a plurality of plant-based cheese materials as disclosed herein and no more than 10%, 9%, 8%, 7%, 6%, 5%, 4%, 3%, 2%, 1%, or 0.5% w/w of animal ingredients.

According to some aspects, the substantially plant-based product may include one or more polysaccharides as disclosed herein in a total concentration of between about 0.1 and 30% w/w, optionally between about 0.1 and 20% w/w of the substantially plant-based product, optionally between about 0.1 and 15% w/w, optionally between about 0.1 and 14% w/w, optionally between about 0.1 and 13% w/w, optionally between about 0.1 and 12% w/w, optionally between about 0.1 and 11% w/w, optionally between about 0.1 and 10% w/w, optionally between about 0.1 and 9% w/w, optionally between about 0.1 and 8% w/w, optionally between about 0.1 and 7% w/w, optionally between about 0.1 and 6% w/w, optionally between about 0.1 and 5% w/w, optionally between about 0.1 and 4% w/w, optionally between about 0.1 and 3% w/w, optionally between about 0.1 and 2% w/w, and optionally between about 0.1 and 1% w/w.

According to some aspects, the substantially plant-based product may include a first polysaccharide at a concentration of 10% w/w or less of the substantially plant-based product, optionally 9% w/w or less, optionally 8% w/w or less, optionally 7% w/w or less, optionally 6% w/w or less, 5% w/w or less, optionally 4% w/w or less, optionally 3% w/w or less, optionally 2% w/w or less, and optionally 1% w/w or less.

According to some aspects, the substantially plant-based product may include a second polysaccharide at a concentration of 10% w/w or less of the substantially plant-based product, optionally 9% w/w or less, optionally 8% w/w or less, optionally 7% w/w or less, optionally 6% w/w or less, 5% w/w or less, optionally 4% w/w or less, optionally 3% w/w or less, optionally 2% w/w or less, and optionally 1% w/w or less.

According to some aspects, the substantially plant-based product may include a plant protein at a concentration of 10% w/w or less of the substantially plant-based product, optionally 9% w/w or less, optionally 8% w/w or less, optionally 7% w/w or less, optionally 6% w/w or less, 5% w/w or less, optionally 4% w/w or less, optionally 3% w/w or less, optionally 2% w/w or less, and optionally 1% w/w or less.

According to some aspects, the first polysaccharide may be maltodextrin, inulin, or a combination thereof.

According to some aspects, the second polysaccharide may be modified tapioca starch, unmodified tapioca starch, or a combination thereof.

According to some aspects, the plant protein may be potato protein, pea protein, fava bean protein, soy protein, or a combination thereof.

The products of the present disclosure may have excellent organoleptic properties, such as taste. The products may include hard cheeses and/or soft cheeses, including cheese slices, string cheese, shredded cheese, and the like. The products may have a certain flavor, such as smoked gouda, mozzarella, provolone, American, cheddar, or pepperjack.

According to some aspects, the product according to the present disclosure may have a certain burst strength. As used herein, the term "burst strength" refers to the minimum amount of force required to break a sample of a product. According to some aspects, burst strength may be determined using the TA-108S-5i puncture method. As used herein, the "TA-108S-5i puncture method" refers to a test conducted using a TA.XTPlus or a TA.XTplusC Texture Analyzer with a protocol as follows:
1. Remove a sample having a thickness of 22-25 mm from a refrigerator.
2. Within 30 seconds of removal from the refrigerator, place the sample off set from the base plate of a TA.XTPlus or TA.XTplusC Texture Analyzer to ensure three holes are covered for testing.
3. Quickly replace TA.XTPlus or TA.XTplusC Texture Analyzer top plate and screws.
4. Run the test using a TA-8 ¼" ball probe and the following test settings: Return to Start Compression, 1.0 mm/sec Pre-Test Speed, 1.0 m/sec Test-Speed, 10 mm/sec Post-Test Speed, 10.0 mm Target Distance, and a 5.0 g Auto-Trigger.
5. Repeat the test by pulling the plunger in the center of the base plate then sliding the plate left or right.
6. Repeat for a third test.
7. Burst strength is the average of all three tests.

According to some aspects, the product according to the present disclosure may have a burst strength of between about 50 and 110 g as determined using the TA-108S-5i puncture method, optionally between about 50 and 100 g, and optionally between about 50 and 90 g. Additionally or alternatively, the product according to the present disclosure may have a burst strength of between about 60 and 110 g as determined using the TA-108S-5i puncture method, optionally between about 65 and 110 g, optionally between about 70 and 110 g, optionally between about 75 and 110 g, optionally between about 80 and 110 g, optionally between about 85 and 110 g, optionally between about 90 and 110 g, optionally between about 95 and 110 g, and optionally between about 100 and 110 g.

Also disclosed herein are methods of making the products described herein. For example, the method of the present disclosure may include combining a plurality of materials, such as the plurality of plant-based cheese materials as described herein, to provide a mixture, such as an emulsion. According to some aspects, the plurality of materials may be stirred before, during, and/or after combination. For example, the plurality of materials may be combined in a cooker having one or more agitators. The agitators may include, for example, one or more auger agitators, such as one or more screw-type auger agitators. In a particular embodiment, the cooker may be a low shear cooker, such as a low shear cooker using one or more screw-type auger agitators. Additionally or alternatively, the cooker may be configured to provide stirring via the injection of a fluid, such as steam.

It should be understood that each of the materials may independently be combined with another material simultaneously or sequentially. For example, in some non-limiting aspects, a first portion of the plurality of materials may be combined in a cooker as described herein. The first portion may be stirred for a first period of time. After the first period of time, a second portion of the plurality of materials may be subsequently combined with the first portion and stirred for a second period of time. In some non-limiting examples, a third portion of the plurality of materials may be subsequently combined with the first and second portions after the second period of time. The first, second, and third portions may be stirred for a third period of time.

In some non-limiting examples, the second and/or third portions may independently include one or more oils and/or water, such as steam. It should be understood that steam may be used to provide heating and/or stirring as described herein. In some non-limiting examples, the first portion may be at least 70% w/w of the plurality of materials, optionally at least 80% w/w, and optionally at least 90% w/w. In some non-limiting examples, each of the second and/or third portions may independently be no more than about 30% w/w of the plurality of materials, optionally no more than about 20% w/w, and optionally no more than about 10% w/w.

The method of the present disclosure may further include pouring the mixture into the mold. According to some aspects, the method may further include one or more shearing processes to reduce or eliminate particulate in the product. In some non-limiting examples, a shearing process may be performed before and/or during pouring of the mixture into the mold. For example, the shearing process may include a single pass of the mixture or a portion thereof through a high shear device prior to pouring. Non-limiting examples of a high shear device include a colloidal mill. In a particular embodiment, the method of the present disclosure may include a low shear mixing process followed by the high shear process.

The method of the present disclosure further includes solidifying the mixture to provide a product as described herein, such as plant-based cheese product or a substantially plant-based cheese product. In some non-limiting examples, solidifying the mixture may include providing the poured mixture in a low temperature environment for a certain curing time sufficient to cure the mixture. As used herein, "low temperature" refers to a temperature below room temperature, such as below about 4°C. In some non-limiting examples, the certain curing time may be at least about one day, optionally at least about a week, and optionally at least about two weeks.

The method of the present disclosure may further include one or more processing steps, such as slicing steps, cutting steps, packaging steps, or a combination thereof.

Thus, the claims are not intended to be limited to the aspects shown herein but are to be accorded the full scope consistent with the language of the claims, wherein reference to an element in the singular is not intended to mean "one and only one" unless specifically so stated, but rather "one or more."

Herein, the recitation of numerical ranges by endpoints (e.g., between about 50:1 and 1:1, between about 100 and 500°C, between about 1 minute and 60 minutes) include all numbers subsumed within that range. The Examples and methods disclosed herein demonstrate the recited ranges subsume every point within the ranges.

Further, the word "example" is used herein to mean "serving as an example, instance, or illustration." Any aspect described herein as "example" is not necessarily to be construed as preferred or advantageous over other aspects. Unless specifically stated otherwise, the term "some" refers to one or more. Combinations such as "at least one of A, B, or C," "at least one of A, B, and C," and "A, B, C, or any combination thereof" include any combination of A, B, and/or C, and may include multiples of A, multiples of B, or multiples of C. Specifically, combinations such as "at least one of A, B, or C," "at least one of A, B, and C," and "A, B, C, or any combination thereof" may be A only, B only, C only, A and B, A and C, B and C, or A and B and C, where any such combinations may contain one or more member or members of A, B, or C. Nothing disclosed herein is intended to be dedicated to the public regardless of whether such disclosure is explicitly recited in the claims.

The following examples are not intended to limit the scope of what the inventors regard as their invention.

### SPECIFIC ASPECTS

Below are specific aspects of the disclosure.

Aspect 1. A plant-based cheese product comprising:
a first polysaccharide at a concentration of 5% w/w or less,
a second polysaccharide at a concentration of 5% w/w or less, and
a plant protein at a concentration of 5% w/w or less.

Aspect 2. The plant-based cheese product of aspect 1, wherein the first polysaccharide is maltodextrin, inulin, or a combination thereof.

Aspect 3. The plant-based cheese product of aspect 1 or 2, wherein the second polysaccharide is a starch.

Aspect 4. The plant-based cheese product of aspect 3, wherein the starch is modified tapioca starch, unmodified tapioca starch, or a combination thereof.

Aspect 5. The plant-based cheese product of any one of aspects 1-4, wherein the plant protein is potato protein, pea protein, fava bean protein, soy protein, or a combination thereof.

Aspect 6. A plant-based cheese product comprising a first polysaccharide, a second polysaccharide, and a plant protein, wherein the plant-based cheese product has a burst strength of between about 50 and 110 g as determined using the TA-108S-5i puncture method.

Aspect 7. The plant-based cheese product of aspect 6, wherein the first polysaccharide is maltodextrin, inulin, or a combination thereof.

Aspect 8. The plant-based cheese product of aspect 6 or 7, wherein the second polysaccharide is a starch.

Aspect 9. The plant-based cheese product of aspect 8, wherein the starch is modified tapioca starch, unmodified tapioca starch, or a combination thereof.

Aspect 10. The plant-based cheese product of any one of aspects 6-9, wherein the plant protein is potato protein, pea protein, fava bean protein, soy protein, or a combination thereof.

Aspect 11. A method for making a plant-based cheese product comprising:
combining a plurality of plant-based cheese materials to provide a mixture,
pressing the mixture into a mold, and
solidifying the mixture to provide a plant-based cheese product,
wherein the plurality of plant-based cheese materials comprise:
a first polysaccharide at a concentration of 5% w/w or less,
a second polysaccharide at a concentration of 5% w/w or less, and
a plant protein at a concentration of 5% w/w or less.

Aspect 12. The method of aspect 11, wherein the first polysaccharide is maltodextrin, inulin, or a combination thereof.

Aspect 13. The method of aspect 11 or 12, wherein the second polysaccharide is a starch.

Aspect 14. The method of aspect 13, wherein the starch is modified tapioca starch, unmodified tapioca starch, or a combination thereof.

Aspect 15. The method of any one of aspects 11-14, wherein the plant protein is potato protein, pea protein, fava bean protein, soy protein, or a combination thereof.

Aspect 16. A method for making a plant-based cheese product comprising:
combining a plurality of plant-based cheese materials to provide a mixture,
pressing the mixture into a mold, and
solidifying the mixture to provide a plant-based cheese product,
wherein the plurality of plant-based cheese materials comprise:
a first polysaccharide,
a second polysaccharide, and
a plant protein,
wherein the plant-based cheese product has a burst strength of between about 50 and 110 g as determined using the TA-108S-5i puncture method.

Aspect 17. The method of aspect 16, wherein the first polysaccharide is maltodextrin, inulin, or a combination thereof.

Aspect 18. The method of aspect 16 or 17, wherein the second polysaccharide is a starch.

Aspect 19. The method of aspect 18, wherein the starch is modified tapioca starch, unmodified tapioca starch, or a combination thereof.

Aspect 20. The method of any one of aspects 16-19, wherein the plant protein is potato protein, pea protein, fava bean protein, soy protein, or a combination thereof.

Aspect 21. A substantially plant-based cheese product comprising:
a first polysaccharide at a concentration of 5% w/w or less,
a second polysaccharide at a concentration of 5% w/w or less, and
a plant protein at a concentration of 5% w/w or less.

Aspect 22. The substantially plant-based cheese product of aspect 21, wherein the first polysaccharide is maltodextrin, inulin, or a combination thereof.

Aspect 23. The substantially plant-based cheese product of aspect 21 or 22, wherein the second polysaccharide is a starch.

Aspect 24. The substantially plant-based cheese product of aspect 23, wherein the starch is modified tapioca starch, unmodified tapioca starch, or a combination thereof.

Aspect 25. The substantially plant-based cheese product of any one of aspects 21-24, wherein the plant protein is potato protein, pea protein, fava bean protein, soy protein, or a combination thereof.

Aspect 26. A substantially plant-based cheese product comprising a first polysaccharide, a second polysaccharide, and a plant protein, wherein the substantially plant-based cheese product has a burst strength of between about 50 and 110 g as determined using the TA-108S-5i puncture method.

Aspect 27. The substantially plant-based cheese product of aspect 26, wherein the first polysaccharide is maltodextrin, inulin, or a combination thereof.

Aspect 28. The substantially plant-based cheese product of aspect 26 or 27, wherein the second polysaccharide is a starch.

Aspect 29. The substantially plant-based cheese product of aspect 28, wherein the starch is modified tapioca starch, unmodified tapioca starch, or a combination thereof.

Aspect 30. The substantially plant-based cheese product of any one of aspects 26-29, wherein the plant protein is potato protein, pea protein, fava bean protein, soy protein, or a combination thereof.

Aspect 31. A method for making a substantially plant-based cheese product comprising:
combining a plurality of plant-based cheese materials and an animal ingredient to provide a mixture,
pressing the mixture into a mold, and
solidifying the mixture to provide a substantially plant-based cheese product,
wherein the plurality of plant-based cheese materials comprise:
a first polysaccharide at a concentration of 5% w/w or less,
a second polysaccharide at a concentration of 5% w/w or less, and
a plant protein at a concentration of 5% w/w or less.

Aspect 32. The method of aspect 31, wherein the first polysaccharide is maltodextrin, inulin, or a combination thereof.

Aspect 33. The method of aspect 31 or 32, wherein the second polysaccharide is a starch.

Aspect 34. The method of aspect 33, wherein the starch is modified tapioca starch, unmodified tapioca starch, or a combination thereof.

Aspect 35. The method of any one of aspects 31-34, wherein the plant protein is potato protein, pea protein, fava bean protein, soy protein, or a combination thereof.

Aspect 36. A method for making a substantially plant-based cheese product comprising:
combining a plurality of plant-based cheese materials and an animal ingredient to provide a mixture,
pressing the mixture into a mold, and
solidifying the mixture to provide a substantially plant-based cheese product,
wherein the plurality of plant-based cheese materials comprise:
a first polysaccharide,
a second polysaccharide, and
a plant protein,
wherein the substantially plant-based cheese product has a burst strength of between about 50 and 110 g as determined using the TA-108S-5i puncture method.

Aspect 37. The method of aspect 36, wherein the first polysaccharide is maltodextrin, inulin, or a combination thereof.

Aspect 38. The method of aspect 36 or 37, wherein the second polysaccharide is a starch.

Aspect 39. The method of aspect 38, wherein the starch is modified tapioca starch, unmodified tapioca starch, or a combination thereof.

Aspect 40. The method of any one of aspects 36-39, wherein the plant protein is potato protein, pea protein, fava bean protein, soy protein, or a combination thereof.

Aspect 41. A plant-based product comprising:
a first polysaccharide at a concentration of 5% w/w or less,
a second polysaccharide at a concentration of 5% w/w or less, and
a plant protein at a concentration of 5% w/w or less.

Aspect 42. A plant-based product comprising a first polysaccharide, a second polysaccharide, and a plant protein, wherein the plant-based product has a burst strength of between about 50 and 110 g as determined using the TA-108S-5i puncture method.

Aspect 43. A method for making a plant-based product comprising:
combining a plurality of plant-based materials to provide a mixture,
pressing the mixture into a mold, and
solidifying the mixture to provide a plant-based product,
wherein the plurality of plant-based materials comprise:
a first polysaccharide at a concentration of 5% w/w or less,
a second polysaccharide at a concentration of 5% w/w or less, and
a plant protein at a concentration of 5% w/w or less.

Aspect 44. A method for making a plant-based product comprising:
combining a plurality of plant-based materials to provide a mixture,
pressing the mixture into a mold, and
solidifying the mixture to provide a plant-based product,
wherein the plurality of plant-based materials comprise:
a first polysaccharide,
a second polysaccharide, and
a plant protein,
wherein the plant-based product has a burst strength of between about 50 and 110 g as determined using the TA-108S-5i puncture method.

Aspect 45. A substantially plant-based product comprising:
a first polysaccharide at a concentration of 5% w/w or less,
a second polysaccharide at a concentration of 5% w/w or less, and
a plant protein at a concentration of 5% w/w or less.

Aspect 46. A substantially plant-based product comprising a first polysaccharide, a second polysaccharide, and a plant protein, wherein the substantially plant-based product has a burst strength of between about 50 and 110 g as determined using the TA-108S-5i puncture method.

Aspect 47. A method for making a substantially plant-based product comprising:
combining a plurality of plant-based materials and an animal ingredient to provide a mixture,
pressing the mixture into a mold, and
solidifying the mixture to provide a substantially plant-based product,
wherein the plurality of plant-based materials comprise:
a first polysaccharide at a concentration of 5% w/w or less,
a second polysaccharide at a concentration of 5% w/w or less, and
a plant protein at a concentration of 5% w/w or less.

Aspect 48. A method for making a substantially plant-based product comprising:
combining a plurality of plant-based materials and an animal ingredient to provide a mixture,
pressing the mixture into a mold, and
solidifying the mixture to provide a substantially plant-based product,
wherein the plurality of plant-based materials comprise:
a first polysaccharide,
a second polysaccharide, and
a plant protein,
wherein the substantially plant-based product has a burst strength of between about 50 and 110 g as determined using the TA-108S-5i puncture method.

### EXAMPLES

### Example I: Preparation of Plant-Based Cheese Product

Water was added to a cooker having an auger. In the cooker, the water was combined with sunflower oil, modified potato starch, lactic acid, sea salt, a yeast and mold inhibitor, coloring agents, flavoring agents, and the components shown in Table 1.

**Table 1**

| **Component** | **Concentration (% w/w)** |
|---|---|
| Tapioca Maltodextrin | 1.212 |
| Modified Tapioca Starch | 3.500 |
| Potato Protein | 2.000 |

The combination was stirred for five minutes, and coconut oil was then added. The combination was stirred for another five minutes, and steam was then injected into the cooker until the temperature reached 197°F sufficient to provide an emulsion. The emulsion was stirred for an additional three minutes then transferred to a surge tank. From the surge tank, the emulsion was passed once through a colloid mill and into cardboard molds. The molds were transferred to a refrigerator and stored for about two weeks for curing. After curing, the plant-based cheese product was sliced.

### Example II: Analysis of Plant-Based Cheese Product (Taste)

The plant-based cheese product slices prepared according to Example I was analyzed in a two-day study that included 170 participants assessing a total of five cheese products as shown in Table 2.

**Table 2: Cheese Products**

| **Product Name** | **Product Type** |
|---|---|
| Product (A) | Innovative Plant-Based (Example I) |
| Product (B) | Comparative Plant-Based |
| Product (C) | Comparative Plant-Based |
| Product (D) | Comparative Plant-Based |
| Product (E) | Dairy-Based Control |

As shown in Table 2, four of the five products studied were plant-based cheeses which were evaluated according to an incomplete block sequential monadic design. One commercial dairy cheese was also served blocked in the last position to all consumers.

On day one, each product was served blind as half of a grilled cheese sandwich. Each sandwich included two slices of bread, two slices of cheese, and two 2 teaspoons of vegenaise, was cooked on griddle, and was cut diagonally with a sharp knife. Care was taken to ensure each sandwich was not flattened or had cheese hanging outside the bread. Water and unsalted crackers were used as a palate cleanse before each sample. There was a two-minute timed break between samples.

On day two, participants evaluated the same products served blind as half a slice of cheese on a coded white plate. Water and unsalted crackers were again used as a palate cleanse before each sample. There was a two-minute timed break between samples.

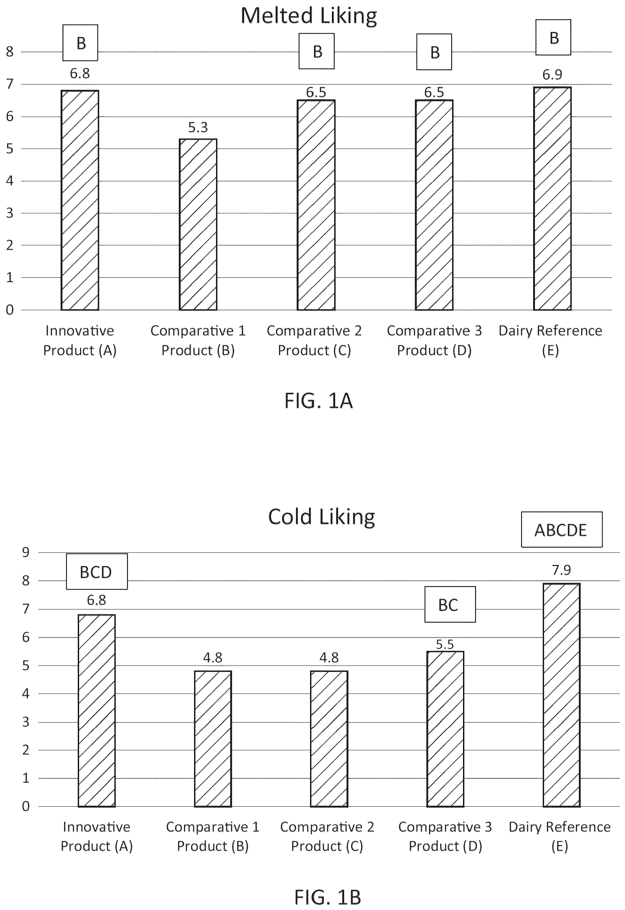

FIGS. 1A and 1B shows the results of the overall opinion of the participants. In particular, FIGS. 1A and 1B shows the average score for each sample and an indication of statistically significant differences. For example, the "B" above Product (A) in the "melted liking" results of FIG. 1A indicates that Product (A) provided a statistically significant increase at 95% confidence as compared with Product (B). Similarly, the "BCD" above Product (A) in the "cold liking" results of FIG. 1B indicates that Product (A) provided a statistically significant increase at 95% confidence as compared with Products (B), (C), and (D).

As shown in FIG. 1B, when evaluated as a cold cheese slice, the innovative plant-based cheese showed clear advantages over all of the plant-based comparative products. Notably, the appearance, flavor, and texture of the innovative plant-based cheese are much more similar to the dairy-based control compared to the comparative plant-based products. Surprisingly, these results were achieved without negatively impacting the cheese's performance when melted, as demonstrated by FIG. 1A ("melted liking").

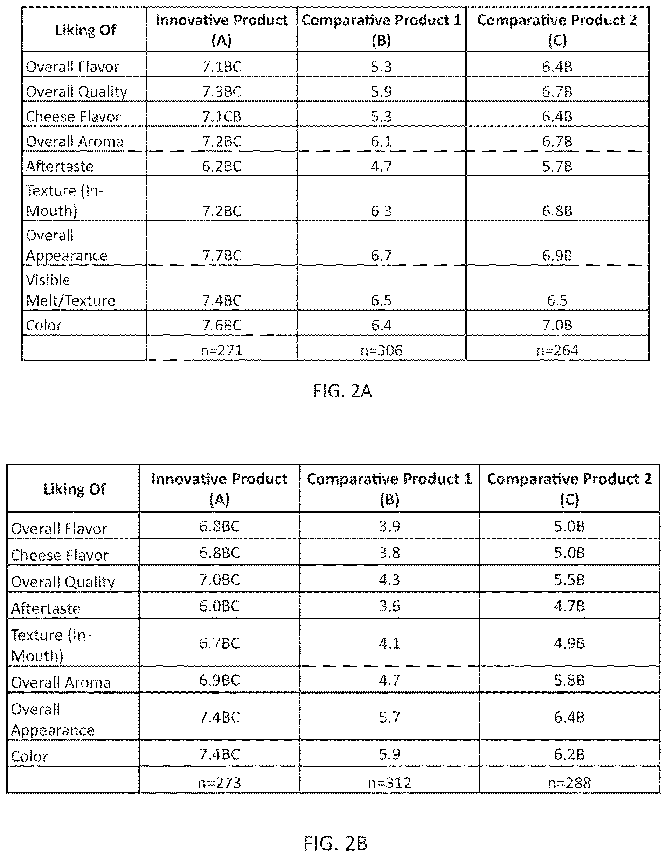

FIG. 2A shows the liking scores of important attributes of three of the products studied when the products were served on a grilled cheese along with an indication of statistically significant differences, as described in relation to FIGS. 1A and 1B. FIG. 2B shows the liking scores of important attributes of the three products when the products were served cold along with an indication of statistically significant differences, as described above.

### Example III: Analysis of Plant-Based Cheese Product (Burst Strength)

The burst strength of a total of five cheeses as shown in Table 3 were analyzed using the TA-108S-5i puncture method.

**Table 3: Cheese Products**

| **Product Name** | **Product Type** |
|---|---|
| Innovative Product | Innovative Plant-Based (Example I) |
| Comparative Product A | Comparative Plant-Based |
| Comparative Product B | Comparative Plant-Based |
| Comparative Product C | Comparative Plant-Based |
| Dairy Reference D | Dairy-Based Control |

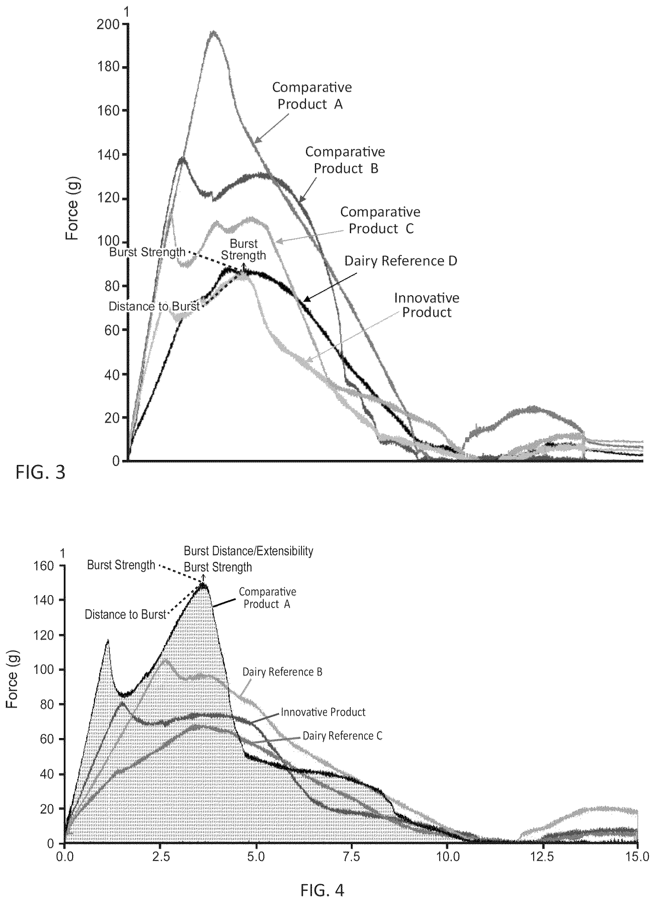

FIG. 3 shows the results of this study. It should be understood that a lower burst strength indicates that the product is more similar to dairy, easier to chew, and gives the product a less brittle texture. As shown in FIG. 3, the innovative plant-based cheese (teal) and the dairy-based control (black) required the least amount of force to break the sample, which was significantly less force than what was required to break the comparative plant-based products (blue, red, and green).

### Example IV: Analysis of Plant-Based Cheese Product (Burst Strength)

The burst strength of a total of four cheeses as shown in Table 4 were analyzed using the TA-108S-5i puncture method.

**Table 4: Cheese Products**

| **Product Name** | **Product Type** |
|---|---|
| Innovative Product | Innovative Plant-Based (Example I) |
| Comparative Product A | Comparative Plant-Based |
| Dairy Reference B | Dairy-Based Control |
| Dairy Reference C | Dairy-Based Control |

Table 5 shows the results of this study. In particular, Table 5 shows the burst strength for each sample expressed as force (g) to breakage. It should again be understood that a lower burst strength indicates that the product is more similar to dairy, easier to chew, and gives the product a less brittle texture.

**Table 5: Cheese Products**

| **Sample** | **Burst Strength (g)** |
|---|---|
| Inventive Plant-Based Cheese | 81.785 |
| Comparative Product A | 138.665 |
| Dairy Reference B | 58.452 |
| Dairy Reference C | 111.639 |

FIG. 4 shows the results of this study. As shown in FIG. 4, the innovative plant-based cheese product (blue) and the Dairy Reference C (red) required the least amount of force to break the sample, which was significantly less force than what was required to break the comparative plant-based cheese product (black) and Dairy Reference B (green).

### Example V: Analysis of Plant-Based Cheese Product (Burst Strength)

The burst strength of a total of three cheeses as shown in Table 6 were analyzed using the TA-108S-5i puncture method.

**Table 6: Cheese Products**

| **Product Name** | **Product Type** |
|---|---|
| Innovative Product | Innovative Plant-Based (Example I) |
| Comparative Product C | Comparative Plant-Based |
| Dairy Reference D | Dairy-Based Control |

Table 7 shows the results of this study. In particular, Table 7 shows the burst strength for each sample expressed as force (g) to breakage. It should again be understood that a lower burst strength indicates that the product is more similar to dairy, easier to chew, and gives the product a less brittle texture.

**Table 7: Cheese Products**

| **Sample** | **Burst Strength (g)** |
|---|---|
| Innovative Product | 71.939 |
| Comparative Product C | 200.503 |
| Dairy Reference D | 84.819 |

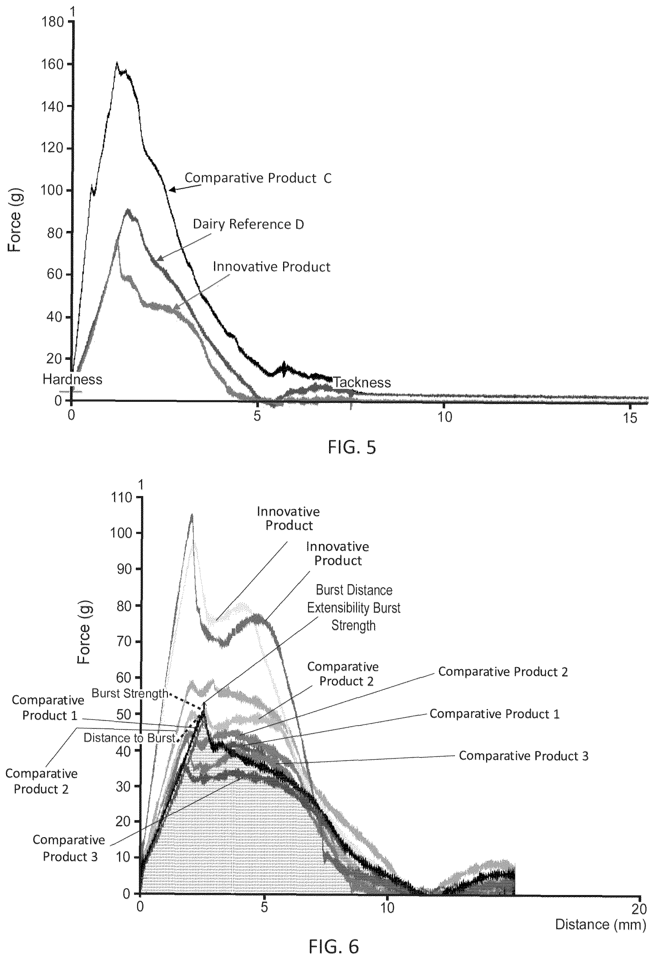

FIG. 5 shows the results of this study. As shown in FIG. 5, the innovative plant-based cheese (red) and the Dairy Reference D (blue) required the least amount of force to break the sample, which was significantly less force than what was required to break the comparative plant-based product (black).

### Example VI: Analysis of Plant-Based Cheese Product (Burst Strength)

First, five plant-based cheese products were prepared. All five products included sunflower oil, modified potato starch, lactic acid, sea salt, a yeast and mold inhibitor, coloring agents, flavoring agents, coconut oil, and calcium citrate in the same concentrations across products. In addition, each product included tapioca maltodextrin, modified tapioca starch, and potato protein in the concentrations shown in Table 8.

**Table 8**

| **Product Name** | **Tapioca Maltodextrin Concentration (% w/w)** | **Modified Tapioca Starch Concentration (% w/w)** | **Potato Protein Concentration (% w/w)** |
|---|---|---|---|
| Innovative Product | 1.212 | 3.500 | 2.000 |
| Innovative Product | 1.212 | 3.500 | 2.000 |
| Comparative Product 1 | 1.212 | 3.500 | 5.500 |
| Comparative Product 2 | 1.212 | 5.500 | 2.000 |
| Comparative Product 3 | 5.500 | 3.500 | 2.000 |

To prepare each product, water was first added to a cooker having an auger. In the cooker, the water was combined with sunflower oil, modified potato starch, lactic acid, sea salt, a yeast and mold inhibitor, coloring agents, flavoring agents, calcium citrate, and the components shown in Table 8. The combination was stirred for five minutes, and coconut oil was then added. The combination was stirred for another five minutes, and steam was then injected into the cooker until the temperature reached 197°F sufficient to provide an emulsion. The emulsion was stirred for an additional three minutes then transferred to a surge tank. From the surge tank, the emulsion was passed once through a colloid mill and into cardboard molds. The molds were transferred to a refrigerator and stored for about two weeks for curing. After curing, the plant-based cheese product was sliced.

The burst strength of these products were then analyzed using the TA-108S-5i puncture method as described herein. This test was repeated two or three times per product. FIG. 6 shows the results of this study. As shown in FIG. 6, the innovative plant-based cheese required an optimal amount of force to break the sample. On the other hand, for force required to break the comparative plant-based cheeses was suboptimal, which results in an overly mushy texture. Suboptimal burst strengths further present significant challenges to manufacturing as the product is often not stiff enough to handle and slice on industrial equipment.

## Claims

1. A substantially plant-based cheese product comprising:
a first polysaccharide at a concentration of 5% w/w or less,
a second polysaccharide at a concentration of 5% w/w or less, and
a plant protein at a concentration of 5% w/w or less.

2. The substantially plant-based cheese product according to claim 1, wherein the first polysaccharide is maltodextrin, inulin, or a combination thereof.

3. The substantially plant-based cheese product according to claim 1 or 2, wherein the second polysaccharide is a starch, in particular modified tapioca starch, unmodified tapioca starch, or a combination thereof.

4. The substantially plant-based cheese product according to anyone of claims 1 to 3, wherein the plant protein is potato protein, pea protein, fava bean protein, soy protein, or a combination thereof.

5. A substantially plant-based cheese product comprising a first polysaccharide, a second polysaccharide, and a plant protein, wherein the substantially plant-based cheese product has a burst strength of between about 50 and 110 g as determined using a TA-108S-5i puncture method.

6. The substantially plant-based cheese product according to claim 5, wherein the first polysaccharide is maltodextrin, inulin, or a combination thereof.

7. The substantially plant-based cheese product according to claim 5 or 6, wherein the second polysaccharide is a starch, in particular modified tapioca starch, unmodified tapioca starch, or a combination thereof.

8. The substantially plant-based cheese product according to anyone of claims 5 to 7, wherein the plant protein is potato protein, pea protein, fava bean protein, soy protein, or a combination thereof.

9. The substantially plant-based cheese product according to anyone of claim 5 to 8, wherein the substantially plant-based cheese product is a plant-based product free of animal ingredient.

10. The substantially plant-based cheese product according to anyone of claims 5 to 9, wherein the first polysaccharide is maltodextrin, inulin, or a combination thereof, wherein the starch is modified tapioca starch, unmodified tapioca starch, or a combination thereof, and wherein the plant protein is potato protein, pea protein, fava bean protein, soy protein, or a combination thereof.

11. A method for making a substantially plant-based cheese product comprising:
combining a plurality of plant-based cheese materials to provide a mixture,
pressing the mixture into a mold, and
solidifying the mixture to provide a plant-based cheese product,
wherein the plurality of plant-based cheese materials comprise:
a first polysaccharide at a concentration of 5% w/w or less,
a second polysaccharide at a concentration of 5% w/w or less, and
a plant protein at a concentration of 5% w/w or less.

12. The method according to claim 11, wherein the first polysaccharide is maltodextrin, inulin, or a combination thereof.

13. The method according to claim 11 or 12, wherein the second polysaccharide is a starch, in particular modified tapioca starch, unmodified tapioca starch, or a combination thereof.

14. The method according to anyone of claim 11 to 13, wherein the plant protein is potato protein, pea protein, fava bean protein, soy protein, or a combination thereof.

15. The method according to anyone of claims 11 to 14, wherein combining the plurality of plant-based cheese materials to provide the mixture comprises a low shear mixing process.

16. The method according to anyone of claims 11 to 15, wherein the substantially plant-based cheese product has a burst strength of between about 50 and 110 g as determined using a TA-108S-5i puncture method.
